# EUROPÄISCHE PATENTANMELDUNG

(11) **EP 1 656 865 A1**
(43) Veröffentlichungstag der Anmeldung: **17.05.2006**
(21) Anmeldenummer: 05020068.2
(22) Anmeldetag: 15.09.2005
(51) Int. Cl.: A47J 37/06, F24C 15/16

(54) **Koch-, Brat- oder Backgerät, insbesondere Grillrost**

(30) Priorität: 12.11.2004 DE 102004054801
(71) Anmelder: Electrolux Home Products Corporation N.V., 1930 Zaventem (BE)
(72) Erfinder: Reiner, Arnold, 91610 Insingen (DE); Dänzer, Stefan, 91631 Wettringen (DE)
(74) Vertreter: Hochmuth, Jürgen

(57) **Zusammenfassung**

Die Erfindung betrifft ein Koch-, Brat- oder Backgerät, insbesondere einen Grillrost (1), das mindestens ein zumindest abschnittsweise um die seitliche Begrenzung des Geräts (1) umlaufendes Randelement (2) sowie eine Anzahl drahtartiger Streben (3) aufweist, die parallel zueinander angeordnet sind und die zumindest teilweise mit ihren Enden (4, 5) an dem mindestens einen Randelement (2) befestigt sind. Um einen verbesserten Halt des auf dem Gerät zu platzierenden Guts zu erreichen, ist erfindungsgemäß vorgesehen, dass zumindest ein Teil der drahtförmigen Streben (3) mindestens eine Biegung (6, 7) aufweist, so dass die drahtförmige Strebe (3) im an dem mindestens einen Randelement (2) befestigten Zustand eine gegenüber der Ebene (8) des mindestens einen Randelements (2) tiefer liegende versetzte Ebene (9) aufweist. Des weiteren betrifft die Erfindung ein System, bestehend aus einem solchen Koch-, Brat- oder Backgerät und einem wännenförmig ausgebildeten zweiten Koch-, Brat- oder Backgerät (11) mit einer Aufnahmefläche (12).

## Beschreibung

Die Erfindung betrifft ein Koch-, Brat- oder Backgerät, insbesondere einen Grillrost, das mindestens ein zumindest abschnittsweise um die seitliche Begrenzung des Geräts umlaufendes Randelement sowie eine Anzahl drahtartiger Streben aufweist, die parallel zueinander angeordnet sind und die zumindest teilweise mit ihren Enden an dem mindestens einen Randelement befestigt sind. Des weiteren betrifft die Erfindung ein System, bestehend aus einem solchen Koch-, Brat- oder Backgerät und einem wannenförmig ausgebildeten zweiten Koch-, Brat- oder Backgerät mit einer Aufnahmefläche.

Grillroste dieser Art sind im Stand der Technik hinlänglich bekannt. Sie haben eine weitgehend ebene Gestalt und werden mit ihrem Randabschnitt in Auszüge eines Garofens eingeschoben. Der meist umlaufende Randabschnitt wird durch einen im Querschnitt meist kreisförmigen Draht gebildet, wobei parallel zueinander angeordnete Gitterstäbe an diesem Draht angeschweißt sind.

Entweder werden auf dem Grillrost zu grillende Speisen platziert, d. h. das Grill-, Back- oder Bratgut wird auf den Grillrost aufgelegt. Möglich und üblich ist es auch, dass auf der Oberseite des Grillrosts Behälter bzw. Gefäße (z. B. Schüsseln und Bräter) abgestellt werden, in denen zu garendes Gut erwärmt wird.

Aufgrund des Umstandes, dass bekannte Grillroste eine weitgehend ebene Grundkontur aufweisen, besteht die Gefahr, dass bei ruckartigem Auszug oder Einschub des Grillrosts in den Garofen zu garendes Gut bzw. ein auf dem Grillrost abgestelltes Gefäß vom Grillrost abrutscht und in die Kavität des Garofens hineinfällt. Die sehr nachteilige Folge sind zunächst Beschädigungen der Kavität des Ofens, die mit Absplitterungen der Ofenbeschichtung (durch Abplatzungen der Emaillierung) einher gehen können, wodurch Korrosion im Ofeninneren stattfinden kann. Weiterhin kann durch das Herunterfallen von Gut vom Grillrost heißes Fett verspritzt werden, was eine Unfallgefahr darstellt. Abgesehen davon ergibt sich eine starke Verschmutzung der Ofenkavität und ein unschönes Erscheinungsbild der Kavität.

Der Erfindung liegt daher die **Aufgabe** zugrunde, ein Koch-, Brat- oder Backgerät, insbesondere einen Grillrost, der eingangs genannten Art so fortzubilden, dass die genannten Nachteile vermieden werden. Es soll also ein Grillrost geschaffen werden, das sich dadurch auszeichnet, dass das Herunterfallen von Gargut bzw. von Gefäßen vom Grillrost bei dessen Handhabung verhindert oder zumindest erschwert wird.

Die **Lösung** dieser Aufgabe durch die Erfindung ist dadurch gekennzeichnet, dass zumindest ein Teil der drahtförmigen Streben mindestens eine Biegung aufweist, so dass die drahtförmige Strebe im an dem mindestens einen Randelement befestigten Zustand eine gegenüber der Ebene des mindestens einen Randelements tiefer liegende versetzte Ebene aufweist.

Bevorzugt ist das Randelement als geschlossener und um die gesamte seitliche Begrenzung umlaufender Rahmen ausgebildet.

Der Höhenversatz der tiefer liegenden versetzten Ebene gegenüber der Ebene des Randelements beträgt bevorzugt mindestens 2 %, vorzugsweise mindestens 4 %, der Erstreckung des Koch-, Brat- oder Backgeräts.

Mit Vorteil sind alle drahtförmigen Streben mit ihren beiden Enden an dem Randelement befestigt.

Eine fertigungstechnisch einfache Umsetzung des erfindungsgemäßen Vorschlags sieht vor, dass zumindest ein Teil der drahtartigen Streben eine als Knick ausgebildete Biegung nahe der Befestigungsstelle am Randelement aufweist, die die Strebe unter einem Winkel von 45° bis 90° zur Ebene des Randelements nach unten weiterverlaufen lässt. Ferner kann vorgesehen werden, dass der nach unten weiterverlaufende Teil der Strebe eine als Knick ausgebildete Biegung aufweist, die die Strebe in die zur Ebene des Randelements parallele tiefer liegende versetzte Ebene umlenkt.

Die Erstreckung der Biegung bzw. Biegungen der drahtförmigen Streben - in Richtung der Länge bzw. Breite des Geräts betrachtet - ist mit Vorteil kleiner als 10 %, vorzugsweise kleiner als 5 %, der Erstreckung des Koch-, Brat- oder Backgeräts.

Das Randelement bzw. die drahtförmigen Streben können aus Draht mit im Querschnitt kreisförmiger Kontur bestehen.

Zur Schaffung einer Auszugssicherung und um ein übermäßiges Abkippen des Geräts beim Ausziehen aus dem Ofen zu verhindern, kann das Randelement bzw. können die drahtförmigen Streben mindestens eine eine Nase oder einen Rücksprung bildende Umformung aufweisen. Dabei kann die mindestens eine Umformung in der Seitenansicht eine V-förmige Kontur aufweisen.

Das Koch-, Brat- oder Backgerät besteht vorzugsweise aus Metall. Die drahtartigen Streben können auch gitterförmig angeordnet sein. Das Randelement und die drahtartigen Streben können miteinander verschweißt oder verlötet sein.

Das Randelement hat bevorzugt einen Durchmesser zwischen 4 mm und 10 mm. Dem gegenüber können die drahtartigen Streben einen Durchmesser zwischen 1 mm und 4 mm aufweisen. Ein sicherer Halt des aufzunehmenden Guts wird gewährleistet, wenn die drahtartigen Streben einen Abstand zwischen 5 mm und 25 mm voneinander aufweisen. Die Griffigkeit des Geräts wird verbessert, wenn die drahtartigen Streben einen geringeren Durchmesser als das Randelement aufweisen.

Das Koch-, Brat- oder Backgerät kann mit einer Beschichtung aus Nickel und/oder Chrom versehen sein. Alternativ ist auch eine Beschichtung aus PTFE oder Email möglich.

Vorgeschlagen wird auch ein System, bestehend aus dem genannten Koch-, Brat- oder Backgerät und einem wannenförmig ausgebildeten zweiten Koch-, Brat- oder Backgerät mit einer - vorzugsweise ebenen - Aufnahmefläche. Vorgeschlagen wird, dass das Koch-, Brat- oder Backgerät und das wannenförmig ausgebildete zweite Koch-, Brat- oder Backgerät so ausgeformt sind, dass das Koch-, Brat- oder Backgerät formschlüssig auf das wannenförmig ausgebildete zweite Koch-, Brat- oder Backgerät aufgesetzt werden kann. Insbesondere weist das wannenförmig ausgebildete zweite Koch-, Brat- oder Backgerät einen Randbereich auf, der zum formschlüssigen Aufsetzen der drahtartigen Streben des Koch-, Brat- oder Backgeräts ausgebildet ist.

Ein alternatives System besteht aus dem vorgeschlagenen Koch-, Brat- oder Backgerät und einem wannenförmig ausgebildeten zweiten Koch-, Brat- oder Backgerät mit einer Aufnahmefläche, wobei vorgesehen ist, dass das Koch-, Brat- oder Backgerät und das wannenförmig ausgebildete zweite Koch-, Brat- oder Backgerät so ausgeformt sind, dass das zweite Koch-, Brat- oder Backgerät formschlüssig auf das Koch-, Brat- oder Backgerät aufgesetzt werden kann. Dabei ist insbesondere vorgesehen, dass das Koch-, Brat- oder Backgerät eine Trägerstruktur für das wannenförmig ausgebildete zweite Koch-, Brat- oder Backgerät bildet und das wannenförmig ausgebildete zweite Koch-, Brat- oder Backgerät aus formelastischem Material besteht. Mit Vorteil ist dabei das formelastische Material des wannenförmig ausgebildeten zweiten Koch-, Brat- oder Backgeräts ein Kunststoff oder ein gummielastisches Material, insbesondere Silikon. Das wannenförmig ausgebildete zweite Koch-, Brat- oder Backgerät kann zumindest in Teilen seiner seitlichen Bereiche so ausgebildet sein, dass es eine zu den Rändern des Koch-, Brat- oder Backgeräts korrespondierende Form aufweist, die das Koch-, Brat- oder Backgerät im Benutzungszustand des wannenförmig ausgebildeten zweiten Koch-, Brat- oder Backgeräts seitlich einfasst.

Durch die erfindungsgemäße Ausgestaltung eines Grillrosts wird eine definierte und im Randbereich gesicherte Auflage für Gargut bzw. für Gefäße geschaffen, so dass die Gefahr gering ist, dass beim Auszug des Grillrosts aus der Ofenkavität bzw. beim Einschieben in diese auf dem Grillrost platziertes Gut bzw. Gefäße herunterfallen können. Trotzdem bleibt die übliche Funktionalität des Grillrosts unverändert erhalten.

Besondere zusätzliche Sicherungsstäbe oder Ausformungen, wie gelegentlich bei herkömmlichen Grillrosten bekannt, sind bei dem erfindungsgemäßen Grillrost nicht mehr erforderlich.

Der Grillrost ist als selbständiges Gerät genauso verwendbar wie in Kombination mit einem weiteren Gerät, z. B. einem Backblech oder einer Fettpfanne. Hierbei können beide Teile auf der gleichen Einschubebene des Ofens verwendet werden.

Durch den vertikalen Höhenversatz der Rostumrandung ist es ferner möglich, den Grillrost auf einem Backblech zu nutzen und zusammen auf einer Ebene auf dem Auszug oder einem Einhänggitter des Ofens zu verwenden. Dabei sind keine Einbußen bezüglich Abzugssicherung bzw. Kippsicherung (vom Blech kommend) in Kauf zu nehmen.

Möglich ist auch die Kombination des Grillrosts mit darunter angeordnetem Backblech bzw. darunter angeordneter Fettpfanne und auf dem Grillrost aufgesetzter Silikon-Auflage.

In der Zeichnung ist ein Ausführungsbeispiel der Erfindung dargestellt. Es zeigen:

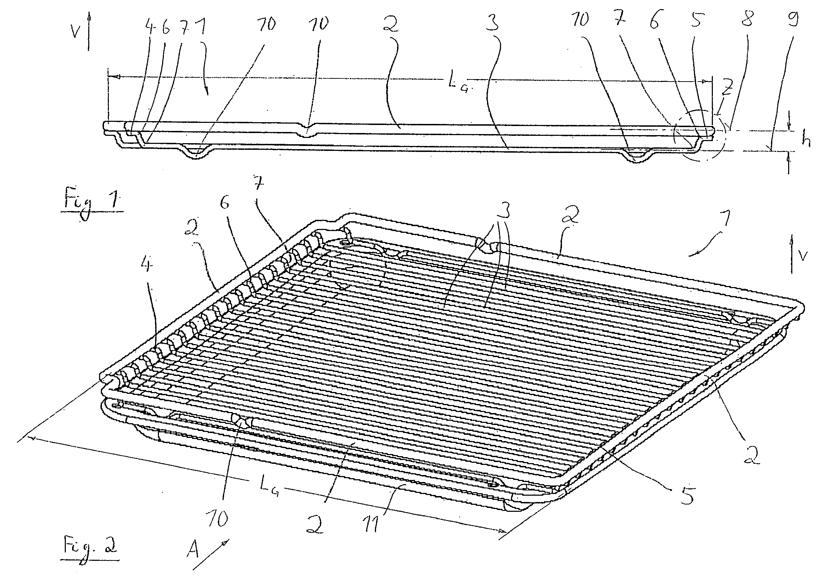

- Fig. 1: einen Grillrost in der Seitenansicht (Ansicht A gemäß Fig. 2),
- Fig. 2: den Grillrost gemäß Fig. 1 in dreidimensionaler Ansicht, wobei der Grillrost auf ein unter ihm angeordnetes zweites Koch-, Brat- oder Backgerät aufgesetzt ist,
- Fig. 3: den Grillrost gemäß Fig. 1 bzw. Fig. 2 in dreidimensionaler Ansicht,
- Fig. 4: den Grillrost samt zweitem Koch-, Brat- oder Backgerät in der Seitenansicht,
- Fig. 5: eine Teilansicht von Fig. 4 mit dem Ofeneinschub und
- Fig. 6: die Einzelheit "Z" gemäß Fig. 1.

Aus den Figuren geht ein Koch-, Brat- oder Backgerät 1 in Form eines Grillrosts hervor. Dieser hat ein umlaufendes Randelement 2, das aus einem Draht mit dem Durchmesser D_{R} gebildet wird (s. Fig. 6). Das Randelement 2 stellt einen im wesentlichen rechteckig ausgebildeten Rahmen dar, an dem eine Anzahl drahtartige Streben 3 befestigt, nämlich festgeschweißt sind. Dabei sind - wie es am besten aus Fig. 6 hervorgeht - die drahtartigen Streben mit ihren beiden Enden 4 und 5 an der Unterseite des Randelements 2 angeschweißt.

Die einzelnen drahtförmig ausgebildeten Streben 3 weisen in ihren Endbereichen 4 bzw. 5 Kröpfungen auf, die durch die beiden Biegungen 6 und 7 gebildet werden. Die erste Biegung 6 stellt einen Knick dar, der die Achse der Strebe 3 aus einer horizontalen Richtung um einen Winkel α umlenkt, der vorliegend ca. 70° zur Horizontalen beträgt. Nachdem sich die Strebe 3 - unter dem Winkel α verlaufend - um eine definierte Erstreckung fortgesetzt hat, lenkt die zweite Biegung 7 in Form eines zweiten Knicks die Achse der Strebe 3 wieder in die Horizontale um. Die beiden Biegungen 6 und 7 stellen also eine Kröpfung der Streben 3 dar, die zu einem Versatz h der Aufnahmeebene 9 gegenüber der Ebene 8 des Randelements 2 führt. Dadurch entsteht eine wannenartige Struktur, die ein Abrutschen der auf dem Grillrost 1 positionierten Speisen bzw. Gefäße verhindert.

Auch aus Fig. 6 ist gut ersichtlich, dass die Streben 3 eine horizontale Ebene 9 definieren, die um einen Höhenversatz h tiefer liegt als die ebenfalls horizontale Ebene 8, die durch das Randelement 2 definiert wird. Die Erstreckung des gebogenen Abschnitts der Strebe 3 in die zur Vertikalen V senkrecht stehenden Horizontalen ist mit L_{B} bezeichnet. Vorgesehen ist, dass diese Erstreckung nur einen kleinen Teil der Erstreckung L_{G} des Geräts 1 beträgt, nämlich bevorzugt lediglich maximal 5 % dieser Erstreckung.

Der Höhenversatz h beträgt mindestens etwa 2 bis 4 % der Erstreckung L_{G} des Koch-, Brat- oder Backgeräts 1; er kann auch mindestens 6 % hiervon betragen.

Der Durchmesser D_{S} der drahtartigen Streben 3 ist dabei deutlich kleiner als derjenige des Randelements 2 (s. Fig. 6). Die einzelnen Streben 3 sind dabei nur soweit voneinander beabstandet, dass sichergestellt ist, dass kein Gargut zwischen den Streben 3 hindurchfallen kann.

Wird der Grillrost 1 isoliert, d. h. ohne weiteres Gerät, verwendet, ist durch Verprägungen in Form von Umformungen 10 im Randelement 2 eine Auszugssicherung realisiert. Durch entsprechende Positionierung dieser Sicherung wird auch ein zu starkes Abkippen des Grillrosts 1 bei seinem Auszug nach vorne vermieden.

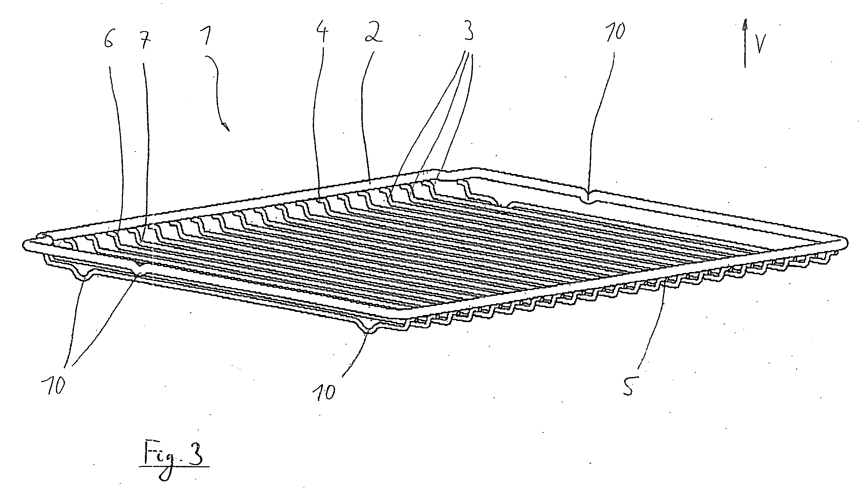

Wie in den Figuren 2, 4 und 5 gesehen werden kann, kann der vorgeschlagene Grillrost 1 auch als System in Kombination mit einem zweiten Koch-, Brat- oder Backgerät 11 - hier in Form eines Backblechs - eingesetzt und verwendet werden. Das Backblech 11 hat in bekannter Weise eine horizontal verlaufende Aufnahmefläche 12 sowie einen Randbereich 13, der gegenüber der Aufnahmefläche 12 höher liegt. Wie in Fig. 4 gesehen werden kann, ist dabei die Form der drahtartigen Streben 3 im Randbereich des Grillrosts 1 so ausgeführt, dass der Grillrost 1 formschlüssig auf den Randbereich 13 des Backblechs 11 aufgesetzt werden kann.

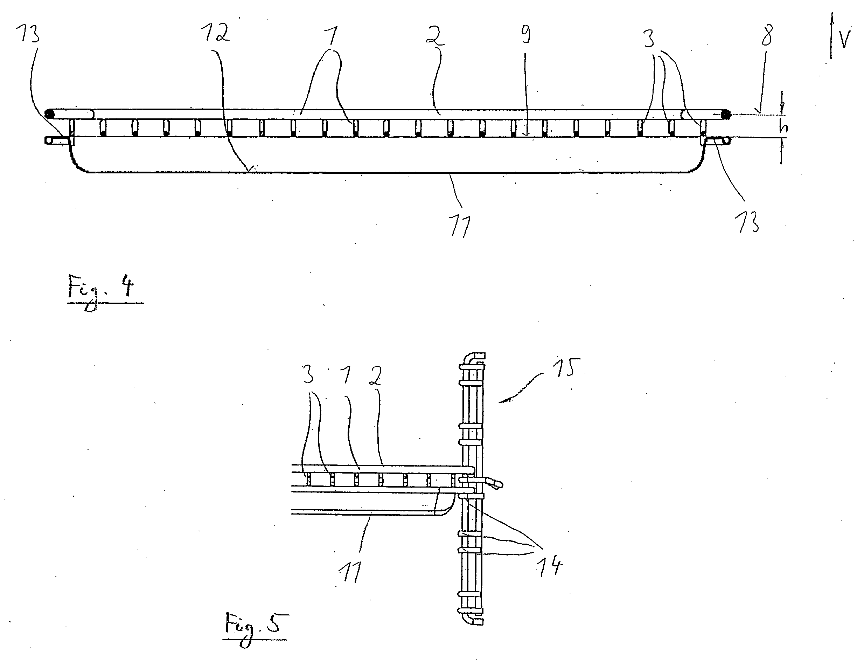

Der Grillrost 1 stützt sich auf der umlaufenden Randfläche des Randbereichs 13 des Bleches 11 ab und fixiert sich durch in die Streben 3 eingebrachte Ausbuchtungen 10 (s. Fig. 2 und 3).

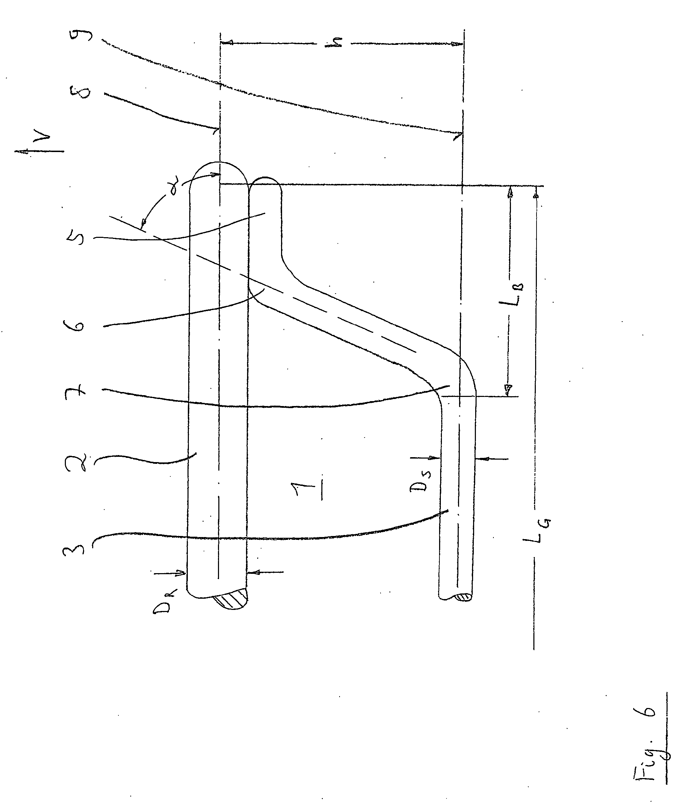

Die gesamte Einheit bestehend aus Grillrost 1 und Backblech 13 kann in gewünschter Höhe in eine Einschubschiene 14 eines Ofeneinschubs 15 eingeschoben werden (s. Fig. 5) .,

Eine alternative Ausführung des Systems, bestehend aus dem erfindungsgemäßen Grillrost 1 und einem zweiten Gerät 11, sieht vor, dass auf den Grillrost 1 ein zweites wannenförmig ausgebildetes Gerät 11 formschlüssig aufgesetzt wird, wobei dieses Gerät 11 aus formelastischem Material besteht. Hierbei ist insbesondere an ein "Blech" aus Silikon gedacht. In diesem Falle wird also auf den Grillrost 1 eine flexible Form 11, insbesondere Backform, aufgesetzt.

Hiernach ist also vorgesehen, dass beispielsweise ein Backblech zweiteilig ausgebildet ist, wobei das eine Teil der Grillrost 1 ist, der ein Trägerelement darstellt, und das andere Teil 11 aus elastischem Material mit geringer Eigensteifigkeit besteht. Das Trägerelement 1 nimmt dabei bei Benutzung des Backblechs das Teil 11 mit geringer Eigensteifigkeit formschlüssig auf und stützt es.

Das zum Einsatz kommende formelastische Material des Geräts 11 ist bevorzugt Silikon, das bis ca. 280 °C temperaturstabil ist, so dass es sich für Koch- bzw. Backzwecke eignet. Auf den Einsatz von Backpapier kann dabei vollständig verzichtet werden.

Das Silikon-Teil kann zwecks Reinigung vom Grillrost abgenommen und leicht in einem üblichen Haushaltsspülbecken gereinigt werden, da durch die Materialwahl (Silikon) eine beliebige Verformung des Teils möglich ist. Aufgrund der Flexibilität des Teils kann dieses leicht gereinigt werden, zumal Silikon grundsätzlich ein gutes Lösen von Schmutz auf dem Teil ermöglicht. Auch kann die Lagerung des Teils in sehr einfacher Weise erfolgen, da es beispielsweise zusammengerollt oder zusammengelegt untergebracht werden kann.

### Bezugszeichenliste

- 1: Koch-, Brat- oder Backgerät (Grillrost)
- 2: Randelement
- 3: drahtartige Strebe
- 4: Ende der Strebe
- 5: Ende der Strebe
- 6: Biegung (Knick)
- 7: Biegung (Knick)
- 8: Ebene des Randelements
- 9: tiefer liegende versetzte Ebene
- 10: Umformung
- 11: zweites Koch-, Brat- oder Backgerät
- 12: Aufnahmefläche
- 13: Randbereich
- 14: Einschubschiene
- 15: Ofeneinschub

- h: Höhenversatz
- L_{G}: Erstreckung des Koch-, Brat- oder Backgeräts
- L_{B}: Erstreckung der Biegung(en)
- α: Winkel
- D_{R}: Durchmesser des Randelements
- D_{S}: Durchmesser der drahtartigen Strebe
- V: vertikale Richtung

## Patentansprüche

1. Koch-, Brat- oder Backgerät, insbesondere Grillrost (1), das mindestens ein zumindest abschnittsweise um die seitliche Begrenzung des Geräts (1) umlaufendes Randelement (2) sowie eine Anzahl drahtartiger Streben (3) aufweist, die parallel zueinander angeordnet sind und die zumindest teilweise mit ihren Enden (4, 5) an dem mindestens einen Randelement (2) befestigt sind,
**dadurch gekennzeichnet,**
**dass** zumindest ein Teil der drahtförmigen Streben (3) mindestens eine Biegung (6, 7) aufweist, so dass die drahtförmige Strebe (3) im an dem mindestens einen Randelement (2) befestigten Zustand eine gegenüber der Ebene (8) des mindestens einen Randelements (2) tiefer liegende versetzte Ebene (9) aufweist.

2. Koch-, Brat- oder Backgerät nach Anspruch 1, **dadurch gekennzeichnet, dass** das Randelement (2) als geschlossener und um die gesamte seitliche Begrenzung umlaufender Rahmen ausgebildet ist.

3. Koch-, Brat- oder Backgerät nach Anspruch 1 oder 2, **dadurch gekennzeichnet, dass** der Höhenversatz (h) der tiefer liegenden versetzten Ebene (9) gegenüber der Ebene (8) des Randelements (2) mindestens 2 %, vorzugsweise mindestens 4 %, der Erstreckung (L_{G}) des Koch-, Brat- oder Backgeräts (1) beträgt.

4. Koch-, Brat- oder Backgerät nach Anspruch 2 oder 3, **dadurch gekennzeichnet, dass** alle drahtförmigen Streben (3) mit ihren beiden Enden (4, 5) an dem Randelement (2) befestigt sind.

5. Koch-, Brat- oder Backgerät nach einem der Ansprüche 1 bis 4, **dadurch gekennzeichnet, dass** zumindest ein Teil der drahtartigen Streben (3) eine als Knick ausgebildete Biegung (6) nahe der Befestigungsstelle am Randelement (2) aufweist, die die Strebe (3) unter einem Winkel (α) von 45° bis 90° zur Ebene (8) des Randelements (2) nach unten weiterverlaufen lässt.

6. Koch-, Brat- oder Backgerät nach Anspruch 5, **dadurch gekennzeichnet, dass** der nach unten weiterverlaufende Teil der Strebe (3) eine als Knick ausgebildete Biegung (7) aufweist, die die Strebe (3) in die zur Ebene (8) des Randelements (2) parallele tiefer liegende versetzte Ebene (9) umlenkt.

7. Koch-, Brat- oder Backgerät nach einem der Ansprüche 1 bis 6, **dadurch gekennzeichnet, dass** die Erstreckung (L_{B}) der Biegung bzw. Biegungen (6, 7) der drahtförmigen Streben (3) kleiner ist als 10 %, vorzugsweise kleiner als 5 %, der Erstreckung (L_{G}) des Koch-, Brat- oder Backgeräts (1).

8. Koch-, Brat- oder Backgerät nach einem der Ansprüche 1 bis 7, **dadurch gekennzeichnet, dass** das Randelement (2) und/oder die drahtförmigen Streben (3) aus Draht mit im Querschnitt kreisförmiger Kontur bestehen.

9. Koch-, Brat- oder Backgerät nach einem der Ansprüche 1 bis 8, **dadurch gekennzeichnet, dass** das Randelement (2) und/oder die drahtförmigen Streben (3) mindestens eine eine Nase oder einen Rücksprung bildende Umformung (10) aufweisen.

10. Koch-, Brat- oder Backgerät nach Anspruch 9, **dadurch gekennzeichnet, dass** die mindestens eine Umformung (10) in der Seitenansicht eine V-förmige Kontur aufweist.

11. Koch-, Brat- oder Backgerät nach einem der Ansprüche 1 bis 10, **dadurch gekennzeichnet, dass** das es aus Metall besteht.

12. Koch-, Brat- oder Backgerät nach einem der Ansprüche 1 bis 11, **dadurch gekennzeichnet, dass** die drahtartigen Streben (3) gitterförmig angeordnet sind.

13. Koch-, Brat- oder Backgerät nach einem der Ansprüche 1 bis 12, **dadurch gekennzeichnet, dass** das Randelement (2) und die drahtartigen Streben (3) miteinander verschweißt oder verlötet sind.

14. Koch-, Brat- oder Backgerät nach einem der Ansprüche 1 bis 13, **dadurch gekennzeichnet, dass** das Randelement (2) einen Durchmesser (D_{R}) zwischen 4 mm und 10 mm aufweist.

15. Koch-, Brat- oder Backgerät nach einem der Ansprüche 1 bis 14, **dadurch gekennzeichnet, dass** die drahtartigen Streben (3) einen Durchmesser (Dₛ) zwischen 1 mm und 4 mm aufweisen.

16. Koch-, Brat- oder Backgerät nach einem der Ansprüche 1 bis 15, **dadurch gekennzeichnet, dass** die drahtartigen Streben (3) einen Abstand zwischen 5 mm und 25 mm voneinander aufweisen.

17. Koch-, Brat- oder Backgerät nach einem der Ansprüche 14 bis 16, **dadurch gekennzeichnet, dass** die drahtartigen Streben (3) einen geringeren Durchmesser als das Randelement (2) aufweisen.

18. Koch-, Brat- oder Backgerät nach einem der Ansprüche 1 bis 17, **dadurch gekennzeichnet, dass** es mit einer Beschichtung aus Nickel und/oder Chrom versehen ist.

19. Koch-, Brat- oder Backgerät nach einem der Ansprüche 1 bis 17, **dadurch gekennzeichnet, dass** es mit einer Beschichtung aus PTFE oder Email versehen ist.

20. System, bestehend aus einem Koch-, Brat- oder Backgerät (1) nach einem der Ansprüche 1 bis 19 und einem wannenförmig ausgebildeten zweiten Koch-, Brat- oder Backgerät (11) mit einer Aufnahmefläche (12), **dadurch gekennzeichnet, dass** das Koch-, Brat- oder Backgerät (1) und das wannenförmig ausgebildete zweite Koch-, Brat- oder Backgerät (11) so ausgeformt sind, dass das Koch-, Brat- oder Backgerät (1) formschlüssig auf das wannenförmig ausgebildete zweite Koch-, Brat- oder Backgerät (11) aufgesetzt werden kann.

21. System nach Anspruch 20, **dadurch gekennzeichnet, dass** das wannenförmig ausgebildete zweite Koch-, Brat- oder Backgerät (11) einen Randbereich (13) aufweist, der zum formschlüssigen Aufsetzen der drahtartigen Streben (3) des Koch-, Brat- oder Backgeräts (1) ausgebildet ist.

22. System, bestehend aus einem Koch-, Brat- oder Backgerät (1) nach einem der Ansprüche 1 bis 19 und einem wannenförmig ausgebildeten zweiten Koch-, Brat- oder Backgerät (11) mit einer Aufnahmefläche (12), **dadurch gekennzeichnet, dass** das Koch-, Brat- oder Backgerät (1) und das wannenförmig ausgebildete zweite Koch-, Brat- oder Backgerät (11) so ausgeformt sind, dass das zweite Koch-, Brat- oder Backgerät (11) formschlüssig auf das Koch-, Brat- oder Backgerät (1) aufgesetzt werden kann.

23. System nach Anspruch 22, **dadurch gekennzeichnet, dass** das Koch-, Brat- oder Backgerät (1) eine Trägerstruktur für das wannenförmig ausgebildete zweite Koch-, Brat- oder Backgerät (11) bildet und das wannenförmig ausgebildete zweite Koch-, Brat- oder Backgerät (11) aus formelastischem Material besteht.

24. System nach Anspruch 23, **dadurch gekennzeichnet, dass** das formelastische Material des wannenförmig ausgebildeten zweiten Koch-, Brat- oder Backgeräts (11) ein Kunststoff oder ein gummielastisches Material, insbesondere Silikon, ist.

25. System nach einem der Ansprüche 22 bis 24, **dadurch gekennzeichnet, dass** das wannenförmig ausgebildete zweite Koch-, Brat- oder Backgerät (11) zumindest in Teilen seiner seitlichen Bereiche so ausgebildet ist, dass es eine zu den Rändern des Koch-, Brat- oder Backgeräts (1) korrespondierende Form aufweist, die das Koch-, Brat- oder Backgerät (1) im Benutzungszustand des wannenförmig ausgebildeten zweiten Koch-, Brat- oder Backgeräts (11) seitlich einfasst.
